# EUROPÄISCHE PATENTSCHRIFT

(11) **EP 3 353 045 B1**
(45) Veröffentlichungstag und Bekanntmachung des Hinweises auf die Patenterteilung: **07.08.2019**
(21) Anmeldenummer: 16766977.9
(22) Anmeldetag: 19.09.2016
(51) Int. Cl.: B63B 1/12, B63B 35/73, B63H 21/17, G05B 11/38, B63B 7/00

(54) **WASSERGLEITFAHRZEUG**
FLOATING VESSEL
ENGIN DE GLISSE AQUATIQUE

(30) Priorität: 21.09.2015 DE 102015115895
(43) Veröffentlichungstag der Anmeldung: 01.08.2018
(73) Patentinhaber: CAYAGO TEC GmbH, 32108 Bad Salzuflen (DE)
(72) Erfinder: WALPURGIS, Hans-Peter, 6352 Ellmau (AT); SCHNAUFFER, Peter, 75038 Oberdingen (DE)
(74) Vertreter: Herrmann, Jochen
(86) Internationale Anmeldenummer: PCT/EP2016/072204
(87) Internationale Veröffentlichungsnummer: WO 2017/050708

(56) Entgegenhaltungen:
- WO-A2-2014/047639
- GB-A- 2 467 364
- US-A1- 2002 023 579

## Beschreibung

Die Erfindung betrifft ein Wassergleitfahrzeug mit einem Rumpf, zumindest einem Sitz und zwei seitlich des Rumpfes angeordneten und mit dem Rumpf mittelbar oder unmittelbar verbundenen Auslegern, wobei jedem Ausleger eine in ihrer Antriebsleistung getrennt ansteuerbare Antriebseinheit mit jeweils zumindest einem von einem Motor, insbesondere einem Elektromotor, angetriebenen Propeller zugeordnet ist.

Aus der Schrift US 2004/0168623 A1 (Multi-Hull Personal Watercraft) ist ein Wasserfahrzeug für den Freizeitbereich mit zwei (Katamaran) oder mehreren (Trimaran) Rümpfen und einem oder mehreren Sitzen bekannt. Zum Antrieb sind ein oder mehrere Wasserauslässe von Strahlantrieben vorgesehen. Diese können zwischen den Rümpfen oder in bzw. an den Rümpfen angeordnet sein. Die Rümpfe können dabei so dimensioniert sein, dass alle Komponenten oder ein Teil der Komponenten eines Strahlantriebs darin untergebracht werden können. Zur Steuerung des Wasserfahrzeugs ist es vorgesehen, den Wasserausstoß der Wasserauslässe über entsprechende Steuerungsmittel unabhängig bzw. abhängig voneinander zu steuern. Dadurch kann beispielsweise der Wenderadius des Wasserfahrzeugs reduziert und eine verbesserte Steuerungskontrolle erreicht werden. Es können zwei Motoren, die jeweils einer Pumpe zugeordnet sind, vorgesehen sein. Die Steuerung kann auch mit einem Motor, der zwei Pumpen antreibt, erfolgen, wobei zwischen dem Motor und den Pumpen unabhängig voneinander ansteuerbare Mittel zur Beeinflussung der Energieübertragung von dem Motor zu den Pumpen vorgesehen sind. Auch können einem Motor und einer Pumpe mehreren Wasserauslässen zugeordnet sein, wobei der Volumenstrom zu den Wasserauslässen separat geregelt wird. Ebenfalls vorgeschlagen ist es, die Strömungsrichtung des ausströmenden Wasserstrahls zu beeinflussen bzw. die Ausrichtung des Strahlantriebs zu verändern.

In der EP 2 585 363 B1 ist ein Wasserfahrzeug für den Freizeitgebrauch mit einem mittleren Rumpf und zwei seitlich und gegenüber dem mittleren Rumpf zurückgesetzt und lösbar angebrachten Rümpfen beschrieben. Die seitlichen Rümpfe sind als geschlossene Schwimmer ausgebildet. Sie beinhalten in einer Ausführungsform der Erfindung jeweils einen Motor (Jet Ski engine). Die seitlichen Rümpfe sind über ein Gestell miteinander verbunden. Der mittlere Rumpf ist um eine schräg zur Wasseroberfläche verlaufene Drehachse schwenkbar mit dem Gestell und damit den seitlichen Rümpfen verbunden. Er ist nach oben offen ausgeführt und trägt einen Sitz für einen Passagier. An dem Gestell sind Griffe montiert. Ein Passagier kann durch Gewichtsverlagerung und Druckausübung auf die Griffe den mittleren Rumpf gegenüber dem Gestell und damit den seitlichen Rümpfen um die Drehachse schwenken und damit das Wasserfahrzeug steuern. Zusätzlich kann es vorgesehen sein, durch geeignete Ansteuerung der Motoren die Fahrtrichtung zu beeinflussen.

Die seitlichen Rümpfe können in unterschiedlichen Positionen quer und längs zur Fahrtrichtung montiert und damit die Schwimmeigenschaften des Wasserfahrzeugs beeinflusst werden.

Die DE 195 38 563 A1 zeigt ein Dreikiel-Driveboot mit einem Vorderschiff und zwei damit verbundenen Seitenschiffen. In den Seitenschiffen ist jeweils ein Elektromotor mit einem zwischen einer Wassereintrittsöffnung und einer Wasseraustrittsöffnung angeordneten, von dem Elektromotor angetriebenen Antriebsrotor vorgesehen. Diese Treiben das Wasserfahrzeug an. Das Wasserfahrzeug kann über die beiden Antriebe gesteuert werden. Dazu sind die Motoren jeweils mit einem Drahtseil mit einem Steuerhebel verbunden. Die Drehzahl der Motoren kann dadurch unterschiedlich eingestellt und die Fahrtrichtung des Wasserfahrzeugs verändert werden.

Aus US2002023579 oder WO2014047639 sind auch Wasserfahrzeuge bekannt.

Nachteilig bei den bekannten Wasserfahrzeugen ist die mechanische Einstellung der Motorleistung. Dazu müssen beispielsweise Bowdenzüge oder andere mechanische Stelleinrichtungen von einem Steuer am Rumpf des Wasserfahrzeugs zu den Motoren in den Auslegern verlegt werden, wodurch die Montage und Demontage der Ausleger erschwert wird. Eine solche Montage und Demontage führt weiterhin leicht zu einer Verstellung der mechanischen Stelleinrichtungen, wobei bereits eine geringe Dejustierung zu unterschiedlichen Einstellungen der Motorleistungen führt und das Wasserfahrzeug nicht mehr genau gesteuert werden kann.

Es ist Aufgabe der Erfindung, ein Wassergleitfahrzeug mit einem Rumpf und zwei seitlich angeordneten Auslegern zu schaffen, welches einfach montiert und für den Transport einfach demontiert werden kann, ohne dass die Fahreigenschaften durch die Montage bzw. Demontage beeinträchtigt werden.

Die Aufgabe der Erfindung wird dadurch gelöst, dass ein Steuer des Wassergleitfahrzeugs mit einem Proportionalgeber verbunden ist und dass ein Steuersignal des Proportionalgebers einer Steuereinheit zugeführt ist, welche die Motoren in Abhängigkeit von dem Steuersignal des Proportionalgebers mittelbar oder unmittelbar ansteuert. Zur Ansteuerung der Motoren sind somit elektrische Verbindungen zwischen dem Steuer und den Auslegern erforderlich, welche einfach getrennt und wieder verbunden werden können. Eine Dejustierung durch die Montage bzw. Demontage kann ausgeschlossen werden, so dass die Steuereigenschaften nicht negativ beeinflusst werden. Durch den Proportionalgeber kann die Stellung des Steuers sehr genau erfasst und in Steuersignale für die Motoren umgesetzt werden, so dass eine präzise Steuerung des Wassergleitfahrzeugs ermöglicht wird. Da zum Steuern keine weiteren mechanischen Stelleinrichtungen verstellt werden müssen, ist die Steuerung sehr leichtgängig. Weiterhin ist die Umsetzung der Steuerung mit einem Proportionalgeber im Vergleich zu mechanischen Lösungen kostengünstig. Die Einstellung der Motorleistungen kann unmittelbar durch die Steuereinheit erfolgen oder die Steuereinheit kann weitere, nachgeschaltete Baugruppen ansteuern, welche dann die Motoren ansteuern.

Die Leistungsstellung kann vorteilhaft an den Motoren, bei Verwendung von Verbrennungsmotoren beispielsweise durch elektromechanische Stellglieder, erfolgen.

Um zu vermeiden, dass bei Verwendung von Elektromotoren Kabel des Leistungsstromkreises zwischen den Auslegern und dem Rumpf verlegt werden müssen kann es vorgesehen sein, dass jeweils eine Motorsteuerung mit einem Leistungssteller in den Auslegern angeordnet und mit der Steuereinheit verbunden ist und dass die Motorsteuerungen die Motorleistung des jeweils zugeordneten Motors in Abhängigkeit von dem Steuersignal des Proportionalgebers steuern. Akkumulatoren sind zur Energieversorgung der Motoren in den Auslegern angeordnet.

Zwischen dem Rumpf und den Auslegern müssen so nur Leitungen eines Steuerstromkreises verlegt werden. Als Leistungssteller können beispielsweise entsprechend ausgelegte Leistungstransistoren verwendet sein, die in Abhängigkeit von dem Steuersignal angesteuert werden und den Stromfluss zwischen einer Energieversorgung und einem Motor einstellen.

Störungen in der Signalübertragung zwischen dem Steuer und den Leistungsstellern der Motoren können dadurch vermieden werden, dass die Steuereinheit ein analoges Steuersignal des Proportionalgebers in zumindest ein digitales Steuersignal umwandelt oder dass der Proportionalgeber ein digitales Steuersignal ausgibt und dass das digitale Steuersignal über Datenverbindungen den in oder an den Auslegern angeordneten Motorsteuerungen zugeführt ist, welche in Abhängigkeit von dem digitalen Steuersignal die Leistung des jeweils zugeordneten Motors steuern. Digitale Steuersignale weisen im Vergleich zu analogen Steuersignalen eine geringere Störempfindlichkeit und bessere Möglichkeiten zur Überwachung der Plausibilität der Signale auf. Dadurch können Fehler beim Ansteuern der Motoren vermieden und damit die Betriebssicherheit des Wassergleitfahrzeugs erhöht werden.

Entsprechend einer bevorzugten Ausführungsvariante der Erfindung kann es vorgesehen sein, dass der Steuereinheit ein Geschwindigkeitssignal eines Geschwindigkeitsstellers des Wassergleitfahrzeugs zugeführt ist und dass das Geschwindigkeitssignal bei der in Abhängigkeit von dem Steuersignal des Proportionalgebers erfolgenden Ansteuerung der Motoren mit berücksichtigt ist. So kann es vorgesehen sein, dass bei einer Einstellung des Geschwindigkeitsstellers von null eine Betätigung des Steuers zu keiner Ansteuerung eines der Motoren führt. Ein unbeabsichtigtes ansteuern eines der Motoren, beispielsweise beim Aufsteigen auf das Wassergleitfahrzeug, kann so vermieden werden. Bei einer mittleren Einstellung des Geschwindigkeitsstellers kann es vorgesehen sein, dass zum Steuern des Wassergleitfahrzeuges die Leistung eines Motors erhöht und die Leistung des anderen Motors verringert wird, um so eine Kurvenfahrt zu ermöglichen. Alternativ dazu kann es vorgesehen sein, dass lediglich die Leistung eines Motors erhöht bzw. die des gegenüberliegenden Motors verringert wird, um eine Kurve zu fahren. Auch eine Erhöhung der Leistung des kurvenaußenliegenden Motors und gleichzeitige Reduzierung des kurveninnenliegenden Motors ist möglich. Bei eingestellte Maximalgeschwindigkeit kann zum Steuern die Leistung eines Motors reduziert werden, während der andere Motor weiterhin mit maximaler Leistung betrieben wird.

Um für die Motoren jeweils ein Ansteuersignal zu erhalten, welches sowohl die Geschwindigkeitsinformation wie auch die Steuerinformation beinhaltet, kann es vorgesehen sein, dass die Steuereinheit aus dem Steuersignal des Proportionalgebers und dem Geschwindigkeitssignal des Geschwindigkeitsstellers zumindest ein digitales Ansteuersignal bildet und den Motorsteuerungen zuführt und/oder dass die Steuereinheit aus dem Geschwindigkeitssignal des Geschwindigkeitsstellers ein digitales Geschwindigkeitssignal bildet und den Motorsteuerungen zuführt. Das Geschwindigkeitssignal des Geschwindigkeitsstellers und das Steuersignal des Proportionalgebers können so von der Steuereinheit in zumindest ein kombiniertes digitales Signal für die beiden Motorsteuerungen umgewandelt werden, welche daraufhin die Motoren ansteuern. Alternativ können das Geschwindigkeitssignal und das Steuersignal von der Steuereinheit separat digitalisiert und den Motorsteuerungen zugeführt werden, welche dann aus dem digitalen Steuersignal und dem digitalen Geschwindigkeitssignal jeweils ein analoges Ansteuersignal für den jeweils zugeordneten Motor generieren.

Eine einfache und präzise Steuerung des Wassergleitfahrzeuges kann dadurch erreicht werden, dass der Proportionalgeber als Inkrementalgeber oder als Potentiometer oder als kapazitiver Proportionalgeber ausgeführt ist.

Vorteilhaft kann es vorgesehen sein, dass die Datenverbindung zwischen der Steuereinheit und den Motorsteuerungen über Datenleitungen oder über Funkverbindungen erfolgt. Bei Verwendung von Funkverbindungen müssen vorteilhaft keine Kabel zwischen dem Rumpf und den Auslegern angeordnet werden.

Ist es vorgesehen, dass die Datenverbindung bidirektional ausgeführt ist, so können sowohl Daten von der Steuereinheit an die Motorsteuerungen als auch von den Motorsteuerungen an die Steuereinheit gesendet werden. So können beispielsweise Motordaten von den Motorsteuerungen erfasst und an die Steuereinheit gesendet werden.

Entsprechend einer Ausführungsvariante der Erfindung kann es vorgesehen sein, dass jedem Motor ein Akkupack aus zusammengeschalteten Akkumulatoren zugeordnet ist, dass der Ladezustand der Akkupacks erfasst und über die Datenverbindung der Steuereinheit zugeführt wird und dass die Steuereinheit dazu ausgelegt ist, die maximal einstellbare Leistung der Motoren in Abhängigkeit von dem Ladezustand des am weitesten entladenen Akkupacks für beide Motoren gleich zu begrenzen. Die Übertragung der Daten zum Ladezustand der Akkupacks kann dabei beispielsweise von den Motorsteuerungen zu der Steuereinheit erfolgen. Durch die beidseitig gleiche Begrenzung der Motorleistung kann vermieden werden, dass die Motoren aufgrund von unterschiedlichen Ladezuständen der zugeordneten Akkumulatoren mit unterschiedlichen Leistungen betrieben werden.

Um eine genaue Synchronisierung der Leistungsabgabe der beiden Motoren zu erreichen und dadurch einen genauen Geradeauslauf des Wassergleitfahrzeuges zu garantieren kann es vorgesehen sein, dass die Temperatur der Motoren und/oder die Temperatur der Akkumulatoren und/oder die Temperatur der Steuereinheit erfasst und bei der Begrenzung der maximal einstellbaren Leistung der Motoren berücksichtigt wird. Die Werte können dabei zusätzlich zu dem Ladezustand der jeweiligen Ackupacks berücksichtigt werden.

Eine einfache Transportierbarkeit des Wassergleitfahrzeuges kann dadurch erreicht werden, dass die Ausleger lösbar mit dem Rumpf verbunden sind und/oder dass die Datenleitungen zwischen der Steuereinheit und den Motorsteuerungen lösbar, insbesondere steckbar, ausgeführt sind. Die Ausleger können so einfach von dem Rumpf getrennt und die Baugruppen einzeln transportiert werden. Die Datenleitungen können an den vorteilhaft wasserdicht ausgeführten Steckverbindungen aufgetrennt werden. Dies ermöglicht eine deutlich einfachere Demontage der Ausleger, als dies bei mechanischen Steuerungsmitteln, wie Bowdenzügen etc., möglich ist. Bei Verwendung von Funkverbindungen zwischen der Steuereinheit und den Motorsteuerungen müssen keine Kabelverbindungen zwischen dem Rumpf und den Auslegern getrennt werden, wodurch die Demontage wie auch die später Montage des Wassergleitfahrzeugs weiter vereinfacht werden kann.

Ein besonders platzsparender Aufbau des Rumpfes für den Transport kann dadurch erreicht werden, dass eine Lenksäule, welche das Steuer trägt, klappbar mit dem Rumpf verbunden ist. Die Lenksäule kann so zum Transport an den Rumpf geklappt werden, wodurch die Außenabmessungen des Rumpfes deutlich reduziert werden können. Da keine mechanischen Steuermittel zwischen dem Steuer und den Auslegern erforderlich sind, kann der Klappmechanismus der Lenksäule sehr einfach ausgeführt werden. Bei Verwendung von Datenleitungen zwischen der Steuereinheit und den Motorsteuerung können diese durch die Klappverbindung zwischen der Lenksäule und dem Rumpf geführt werden. Alternativ dazu können die Datenleitungen im Bereich der Klappverbindung Kontakten zugeführt sein, welche bei aufgeklappter Lenksäule geschlossen und bei eingeklappter Lenksäule getrennt sind. Vorteilhaft können die Motoren bei eingeklappter der Lenksäule nicht angesteuert werden.

Die Fahreigenschaften und die Steuerbarkeit des Wassergleitfahrzeuges können dadurch verbessert werden, dass an den Auslegern jeweils ein oder mehrere elektromotorisch angetriebene Steuerelemente angeordnet sind und dass diese elektromotorisch angetriebenen Steuerelemente in Abhängigkeit von dem Steuersignal und/oder dem Geschwindigkeitssignal und/oder dem zumindest einen aus dem Steuersignal und dem Geschwindigkeitssignal gebildeten digitalen Ansteuersignal ansteuerbar sind. Die elektromotorisch angetriebenen Steuerelemente werden somit zusätzlich zu den Motoren in Abhängigkeit von der Stellung des Steuers oder des Geschwindigkeitsstellers eingestellt.

Dabei kann es vorgesehen sein, dass als elektromotorisch angetriebene Steuerelemente an den Auslegern schwenkbar angebrachte Steuerklappen und/oder Ruder und/oder schwenkbar angeordnete Umlenkdüsen und/oder schwenkbar angeordnete Propellergondeln ansteuerbar sind. Durch all diese Steuerelemente kann eine Steuerwirkung erbracht werden, die zusätzlich zu der Ansteuerung der Motoren wirkt.

Um eine Rückwärtsfahrt des Wassergleitfahrzeuges zu ermöglichen kann es vorgesehen sein, dass die Schubrichtung der Antriebseinheiten umkehrbar ist. Dazu wird gegenüber der Vorwärtsfahrt vorzugsweise die Drehrichtung der Motoren umgekehrt, so dass sich die Propeller in umgekehrter Richtung drehen. Die Steuerung des Wassergleitfahrzeuges erfolgt dabei entsprechend der Steuerung bei der Vorwärtsfahrt durch unterschiedliche Ansteuerung der beiden Motoren. Durch eine Umkehr der Schubrichtung von nur einer Antriebseinheit, während die andere Antriebseinheit weiterhin in Vorwärtsrichtung betrieben wird, kann weiterhin eine sehr enge Kurvenfahrt erreicht werden.

Die Erfindung wird im Folgenden anhand eines in den Zeichnungen dargestellten Ausführungsbeispiels näher erläutert. Es zeigen:
- Fig. 1: in perspektivischer Seitenansicht ein Wassergleitfahrzeug,
- Fig. 2: das in Figur 1 gezeigte Wassergleitfahrzeug in einer Seitenansicht,
- Fig. 3: das in Figur 1 und Figur 2 gezeigte Wassergleitfahrzeug in einer Rückansicht,
- Fig. 4: einen Rumpf des in den Figuren 1, 2 und 3 gezeigten Wassergleitfahrzeugs in einer Transportposition und in einer Seitenansicht,
- Fig. 5: das in Figur 4 gezeigte Wassergleitfahrzeug in einer perspektivischen Seitenansicht,
- Fig. 6: das Wassergleitfahrzeug aus Fig. 1 mit zusätzlich angebrachten Steuerklappen,
- Fig. 7: das Wassergleitfahrzeug aus Fig. 2 mit zusätzlich angebrachten Rudern,
- Fig. 8: das Wassergleitfahrzeug aus Fig. 3 mit zusätzlich angebrachten Steuerklappen und Rudern und
- Fig. 9: eine Düsenanordnung für ein Wassergleitfahrzeug.

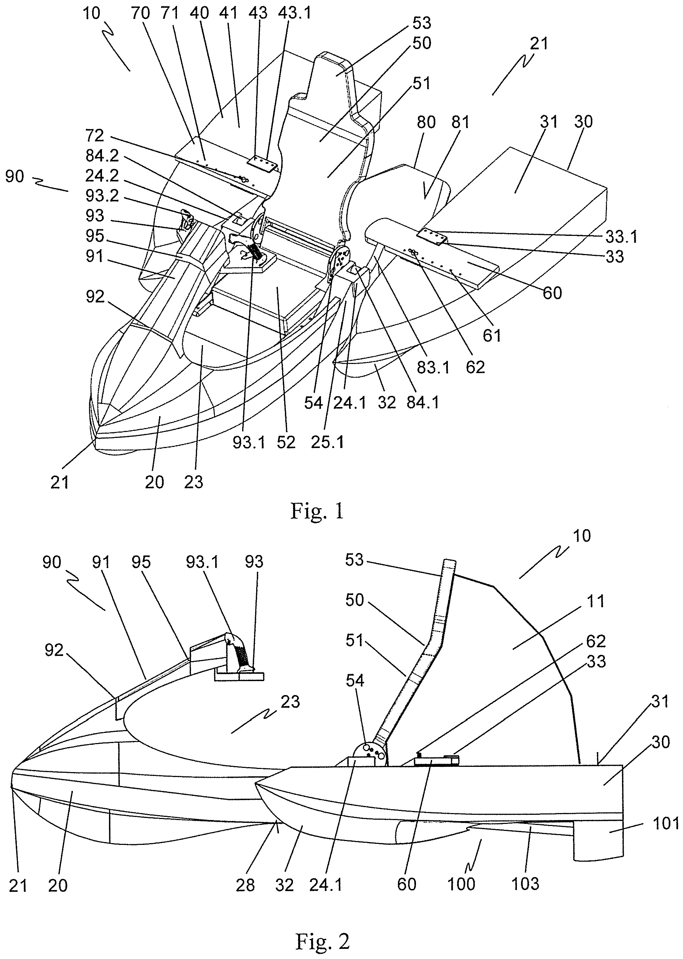

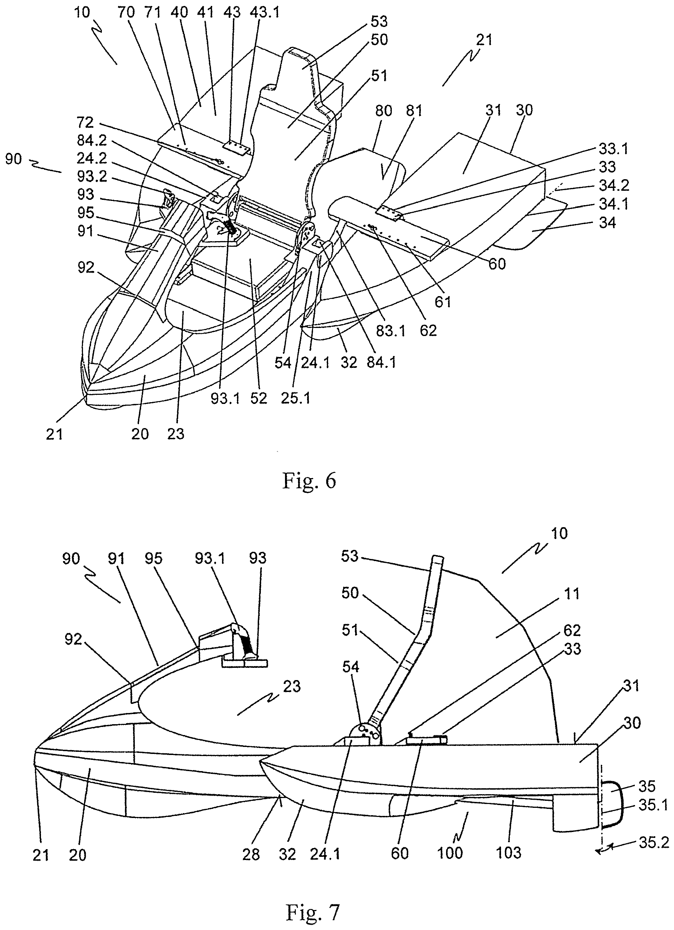

Figur 1 zeigt in perspektivischer Seitenansicht ein Wassergleitfahrzeug 10. Das Wassergleitfahrzeug 10 ist aus einem Rumpf 20 und zwei seitlich und in Richtung zu dem Heck 21 des Wassergleitfahrzeugs 10 zurückgesetzt dazu angeordneten Auslegern 20, 30 aufgebaut. Der Rumpf 20 trägt einen Sitz 50 mit einer Sitzfläche 52, einer Rückenlehne 51 und einer Kopfstütze 53. Die Rückenlehne 51 ist über eine Gelenkverbindung 54 gelenkig mit der Sitzfläche 52 verbunden. Vor der Sitzfläche 52 bildet der Rumpf 20 einen Fußraum 23 aus. Einem Steuersystem 90 sind eine Lenksäule 91 und ein Steuer 93 zugeordnet. Die Lenksäule 91 ist von einem Bug 21 des Wassergleitfahrzeuges 10 ausgehend schräg nach oben weisend zum Sitz 50 hin ausgerichtet. An ihrem dem Bug 21 zugewandten Ende ist die Lenksäule 91 über eine Klappverbindung 92 mit dem Rumpf 20 verbunden. Gegenüberliegend dazu ist das Steuer 93 über ein Drehgelenk 95 mit der Lenksäule 91 verbunden. Das Steuer 93 trägt in der gezeigten Ausführungsvariante zwei Steuergriffe 93.1, 93.2, an denen in Figur 6 gezeigte Bedienelemente 94 angeordnet sind. Weiterhin ist an dem Steuer 93 ein dem Sitz 50 zugewandtes und nicht dargestelltes Display angeordnet. In einer alternativen Ausgestaltungsvariante kann das Steuer auch als Steuerrad oder als Lenkrad ausgeführt sein.

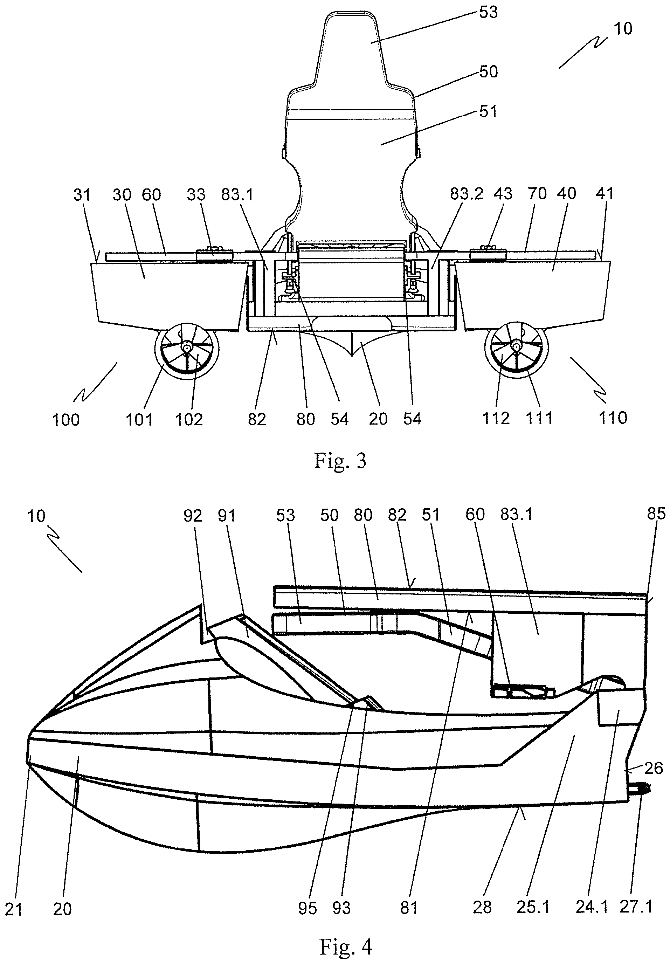

Im Anschluss an den Rumpf 20 und zwischen den Auslegern 30, 40 ist eine Gleitplatte 80 vorgesehen. In der gezeigten ausgeklappten Betriebsposition ist eine obere Seite 81 der Gleitplatte 80 von der Wasseroberfläche abgewandt, während eine in Figur 3 gezeigte Gleitfläche 82 der Gleitplatte 80 zur Wasseroberfläche zeigt. Seitlich sind an der Gleitplatte 80 Stege 83.1, 83.2 angeordnet. Die Stege 83.1, 83.2 sind über Gelenkverbindungen 84.1, 84.2 gelenkig mit Lagerböcken 24.1, 24.2, welche an seitlich an dem Rumpf 20 angeordneten Lagerstegen 25.1, 25.2 angeordnet sind, befestigt. An den Stegen 83.1, 83.2, der Gleitplatte 80 sind Halter 60, 70 zur Befestigung der Ausleger 30, 40 angeordnet. Auf den Oberseiten 31, 41 der Ausleger 30, 40 sind Haltevorrichtungen 33, 43 angebracht. Die Haltevorrichtungen 33, 43 bilden U-förmig ausgeformte Halteabschnitte 33.1, 43.1 aus, in denen die Halter 60, 70 eingeführt sind. Gegenüberliegend zu den Halteabschnitten 33.1, 43.1 weisen die Halter 60, 70 Befestigungsaufnahmen 61, 71 in Form von Bohrungen auf. Die Halter 60, 70 sind mit Befestigungselementen 62, 72, welche durch die Befestigungsaufnahmen 61,71 geführt sind, mit den Haltevorrichtungen 33, 43 verbunden. Gegenüberliegend zu den Oberseiten 31, 41 bilden die Ausleger 30, 40 dem Wasser zugewandte Unterseiten und 32, 42 aus.

Figur 2 zeigt das in Figur 1 gezeigte Wassergleitfahrzeug 10 in einer Seitenansicht. Zwischen der Rückenlehne 51 des Sitzes 50 und der in Figur 1 gezeigten oberen Seite 81 der Gleitplatte 80 ist ein aufblasbares Kissen 11 aufgespannt. Nicht aufgeblasen kann das Kissen 11 in der Rückenlehne 51 des Sitzes 50 verstaut werden. Alternativ oder zusätzlich dazu kann in der Rückenlehne 51 oder in der Gleitplatte 80 eine nicht dargestellte Luftmatratze integriert sein. Die Luftmatratze kann bei Bedarf aufgeblasen und von dem Wassergleitfahrzeug 10 gezogen werden. Dazu ist die Luftmatratze vorzugsweise an das Wassergleitfahrzeug 10 angebunden. Die Luftmatratze bietet Platz für einen zweiten Passagier und kann auch in einer Notsituation bei einer erforderlichen Personenrettung eingesetzt werden.

Die Gleitplatte 80 ist in ihrer Betriebsposition so angeordnet, dass sie mit ihrer in Figur 3 gezeigten unteren Gleitfläche 82 unmittelbar an eine Rumpfunterseite 28 des Rumpfes 20 anschließt. Die Rumpfunterseite 28 und die Gleitfläche 82 bilden so dem Wasser zugewandt eine durchgängige und stufenlos ineinander übergehende Fläche aus. In den Auslegern 30, 40 sind Antriebseinheiten 100, 110 angeordnet. Die Antriebseinheiten 100, 110 umfassen in den Auslegern 30, 40 angeordnete Motoren. Die Motoren sind vorzugsweise als Elektromotoren ausgeführt. Die Energieversorgung erfolgt bei Elektromotoren über Akkumulatoren, welche als Akkupacks verschaltet und ebenfalls in den Auslegern 30, 40 angeordnet sind. Die Motoren treiben über Antriebswellen 103 in Figur 3 gezeigte Propeller 102, 112 an. Die Propeller 102, 112 sind innerhalb von Strömungskanälen 101, 111 angeordnet.

Figur 3 zeigt das in Figur 1 und Figur 2 gezeigte Wassergleitfahrzeug in einer Rückansicht.

In den Figuren 1 bis 3 ist das Wassergleitfahrzeug 10 in seiner ausgeklappten Betriebsposition gezeigt. Die Ausleger 30, 40 sind über die Halter 60, 70 mit dem Rumpf 20 verbunden. Der Sitz 50 ist aufgeklappt und bietet Platz für einen Passagier. Die Lenksäule 91 steht in ihrer Betriebsposition, sodass das Steuer 93 und die Bedienelemente 94 von dem Passagier bedient werden können. Der Antrieb des Wassergleitfahrzeuges 10 erfolgt über die beschriebenen Antriebseinheiten 100, 110. Dazu werden die Propeller 102, 112 von den Motoren angetrieben. Die Steuerung des Wassergleitfahrzeuges 10 erfolgt über das Steuer 93 und die daran angeordneten Bedienelemente 94. Dazu kann der Passagier die Steuergriffe 93.1, 93.2 umfassen und das Steuer 93 an dem Drehgelenk 95 gegenüber der Lenksäule 91 drehen. Im Bereich des Drehgelenkes 95 ist ein nicht dargestellter, elektronischer Proportionalgeber angeordnet. Dieser wird durch Drehen des Steuers 93 verstellt, wodurch ein Steuersignal als Ausgangssignal des Proportionalgebers verändert wird. Das Steuersignal wird an eine ebenfalls nicht dargestellte Steuereinheit weitergeleitet. Die Steuereinheit ist innerhalb des Steuers 93 oder der Lenksäule 91 angeordnet. An dem Steuer 93 oder alternativ im Fußraum 23 des Rumpfes 20 ist ein Geschwindigkeitssteller zur Einstellung der Geschwindigkeit des Wassergleitfahrzeuges 10 vorgesehen. Ein Geschwindigkeitssignal als Ausgangssignal des Geschwindigkeitsstellers ist ebenfalls der Steuereinheit zugeführt. Die Steuereinheit bildet aus dem Steuersignal und dem Geschwindigkeitssignal ein digitales Ansteuersignal zur Ansteuerung der Motoren. Alternativ dazu kann der Proportionalgeber schon dazu ausgelegt sein, ein digitales Steuersignal bereitzustellen. Das digitale Ansteuersignal wird über Datenverbindungen zu zwei Motorsteuerungen, welche in den Auslegern 30, 40 angeordnet sind, geleitet. Die Datenübertragung erfolgt dabei über nicht dargestellte Datenleitungen oder über Funkverbindungen zwischen der Steuereinheit und den Motorsteuerung. Die Motorsteuerungen weisen elektronische Leistungssteller auf. Diese sind zwischen die Akkupacks und die Elektromotoren geschaltet. Mithilfe der Leistungsstelle wird die Leistung der Motoren in Abhängigkeit von dem Ansteuersignal eingestellt. Eine Geschwindigkeitseinstellung über den Geschwindigkeitssteller führt zu einer gleichen Einstellung bei der Motoren, so dass das Wassergleitfahrzeug 10 geradeaus fährt. Vorzugsweise werden die Motoren dabei drehzahlgeregelt, sodass ein guter Geradeauslauf des Wassergleitfahrzeuges 10 erreicht wird. Ein Steuersignal des Steuers 93 führt dazu, dass einer der Motoren mit einer höheren Leistung und damit Drehzahl betrieben wird als der andere Motor. So wird beispielsweise bei einer gewünschten Rechtskurve und einer Drehung des Steuers 93 nach rechts der linke Motor und damit der linke Propeller 102 stärker angetrieben als der rechte Motor mit dem rechten Propeller 112. Dadurch wird eine Richtungsänderung des Wassergleitfahrzeuges 10 bewirkt. Wie hoch die Leistung der Motoren infolge einer Steuerbewegung eingestellt wird ist vorzugsweise abhängig von der Geschwindigkeitseinstellung durch den Geschwindigkeitssteller vorgegeben. So kann es vorgesehen sein, dass bei einer Geschwindigkeitseinstellung von null ein Steuersignal durch das Steuer 93 zu keiner Ansteuerung der Motoren oder nur zu einer Ansteuerung mit geringer Leistung führt. Dadurch kann vermieden werden, dass das Wassergleitfahrzeug 10, beispielsweise beim Aufsitzen des Passagiers, durch eine unbeabsichtigte Lenkbewegung in Bewegung oder stark in Bewegung gesetzt wird. Bei einer mittleren eingestellten Geschwindigkeit des Wassergleitfahrzeuges 10 kann infolge einer Lenkbewegung die Leistung bzw. die Drehzahl eines Motors reduziert und die des gegenüberliegenden Motors erhöht werden. Ebenfalls möglich ist es, die Leistung eines Motors unverändert beizubehalten und nur die Leistung des gegenüberliegenden Motors anzuheben oder zu senken. Bei maximaler Geschwindigkeitseinstellung ist es hingegen vorgesehen, dass die Leistung und damit die Drehzahl eines Motors reduziert wird, während der gegenüberliegende Motor weiterhin bei maximaler Leistung bzw. Drehzahl betrieben wird. Ebenfalls möglich ist es, die Schubrichtung einer Antriebseinheit 100,110 umzukehren, während die gegenüberliegende Antriebseinheit 100,110 weiterhin in Vorwärtsrichtung betrieben wird. Durch diese Ansteuerung der Antriebseinheiten 100,110 wird eine enge Kurvenfahrt ermöglicht.

Der Proportionalgeber kann als Inkrementalgeber, als Potentiometer oder als kapazitiver Proportionalgeber ausgeführt sein. Er liefert ein analoges Ausgangssignal, welches proportional zum Stellwinkel des Steuers 93 ist. Solche Proportionalgeber sind kostengünstig und robust. Gleichzeitig weisen sie eine hohe Genauigkeit im Zusammenhang ihres Ausgangssignals mit dem Stellwinkel des Steuers 93 auf, sodass eine präzise Steuerung des Wassergleitfahrzeuges 10 ermöglicht wird. Entsprechend einer alternativen Ausführungsvariante der Erfindung kann es auch vorgesehen sein, dass der Proportionalgeber in Abhängigkeit von seiner Stellposition direkt ein digitales Signal ausgibt.

Bei einer Datenverbindung zwischen der Steuereinheit und den Motorsteuerungen über Datenleitungen sind diese lösbar, vorzugsweise steckbar, mit dem Rumpf 20 bzw. den Auslegern 30, 40 verbunden. Zur Demontage der Ausleger 30, 40 können die Datenleitungen so leicht getrennt werden. Die Steckverbindungen sind entsprechend wasserdicht ausgeführt. In einer möglichen Ausführungsform der Erfindung sind die Datenleitungen in den Haltern 60, 70 verlegt. Bei einer Funkverbindung zwischen der Steuereinheit und den Motorsteuerungen sind vorteilhaft keine Daten- bzw. Signalleitungen zwischen dem Rumpf 20 und den Auslegern 30, 40 erforderlich, wodurch die Montage und die Demontage der Ausleger 30, 40 weiter vereinfacht wird.

In dem gezeigten Ausführungsbeispiel wird von der Steuereinheit das Ansteuersignal zur Ansteuerung der Motoren aus dem analogen Steuersignal des Steuers 93 und dem Geschwindigkeitssignal des Geschwindigkeitsstellers gebildet und an die Motorsteuerungen weitergeleitet. Alternativ dazu ist es auch möglich, das Steuersignal und das Geschwindigkeitssignal separat an die Motorsteuerungen weiterzuleiten. Diese bildenden daraus das jeweilige Ansteuersignal für die Leistungsstellung der Motoren. Ebenfalls möglich ist es, dass die Leistungssteller im Rumpf 20, beispielsweise integriert auf der Steuereinheit, angeordnet sind. Nachteilig hierbei ist jedoch, dass Kabel des Leistungsstromkreises zwischen den Auslegern 30, 40 und dem Rumpf 20 verlegt werden müssen.

In dem gezeigten Ausführungsbeispiel sind weiterhin Elektromotoren zum Antrieb des Wassergleitfahrzeuges 10 vorgesehen. Die Leistungsstellung der Elektromotoren erfolgt dann vorteilhaft durch an den Motorsteuerungen vorgesehene Leistungssteller, insbesondere durch geeignete Leistungstransistoren. Diese sind zwischen als Akkupacks zusammengeschalteten Akkumulatoren und die Elektromotoren geschaltet, wobei in jedem Ausleger 30, 40 ein Akkupack angeordnet ist. Vorteilhaft ist die Datenverbindung zwischen der Steuereinheit und den Motorsteuerungen bidirektionale ausgeführt. Weiterhin sind vorteilhaft die Motorsteuerungen dazu ausgelegt, den Ladezustand der Akkupacks zu erfassen und an die Steuereinheit zu übertragen. Die Steuereinheit kann dann den Ladezustand der Akkupacks bei der Vorgabe der Motorleistungen berücksichtigen. In dem gezeigten Ausführungsbeispiel ist es vorgesehen, dass die Motorleistung bzw. die Drehzahl bei der Motoren in Abhängigkeit des Ladezustandes des am weitesten entladenen Akkupacks begrenzt wird. Dadurch wird vermieden, dass ein Motor, bedingt durch unterschiedliche Ladezustände der Akkupacks, mit einer geringeren maximalen Leistung bzw. Drehzahl betrieben wird als der andere Motor. Vorteilhaft werden zusätzlich zu dem Ladezustand der Akkupacks die Temperatur der Motoren, die Temperatur der Akkumulatoren und/oder die Temperatur der Steuereinheit erfasst und bei der Begrenzung der Motorleistung bzw. Drehzahl berücksichtigt.

Alternativ zu den Elektromotoren können auch Verbrennungsmotoren verwendet sein, welche in den Auslegern 30, 40 angeordnet sind. Vorteilhaft sind dann elektromotorisch angetriebene Stellglieder in den Auslegern 30, 40 angeordnet, welche in Abhängigkeit von dem Ansteuersignal, welches von der Steuereinheit ausgegeben wird, die Leistung bzw. die Drehzahl der Motoren einstellen.

Die Ausleger 30, 40 sind über die Halter 60, 70 mit der Gleitplatte 80 verbunden. Alternativ dazu können die Halter 60, 70 jedoch auch an dem Rumpf 20 befestigt sein. Die Haltevorrichtungen 33, 43 und die Befestigungselemente 62, 72 sind so ausgeführt, dass die Ausleger 30, 40 einfach und schnell von den Haltern 60, 70 gelöst bzw. mit diesen verbunden werden können. Dies ermöglicht eine einfache und schnelle Montage bzw. Demontage der Ausleger 30, 40. Weiterhin weisen die Halter 60, 70 mehrere Befestigungsaufnahmen 61, 71 auf. Diese ermöglichen es, die Ausleger 30, 40 in unterschiedlichen Positionen zu dem Rumpf 20 anzuordnen und zu befestigen. Dadurch können die Fahreigenschaften des Wassergleitfahrzeuges 10 an die jeweiligen Gegebenheiten oder Fahrerwünsche angepasst werden.

Die Gleitplatte 80 ist klappbar am Heck 21 des Rumpfes 20 angebracht und liegt in der gezeigten Betriebsposition mit ihrer Gleitfläche 82 auf der Wasseroberfläche auf. Durch die Gleitplatte 80 werden die Gleiteigenschaften des Wassergleitfahrzeuges 10 verbessert, sodass das Wassergleitfahrzeug 10 schon bei vergleichsweise niedrigen Geschwindigkeiten von der Verdrängerfahrt in die Gleitfahrt übergeht. Das aufblasbare Kissen 11 bewirkt insbesondere bei langsamer Fahrt oder bei Stillstand des Wassergleitfahrzeuges 10 einen zusätzlichen Auftrieb. Weiterhin führt das aufblasbare Kissen 11 zu einer gegenseitigen Abstützung der Rückenlehne 51 des Sitzes 50 und der Gleitplatte 80, welche zu einer zusätzlichen Stabilisierung der Positionen der Rückenlehne 51 und der Gleitplatte 80, insbesondere bei hohen Geschwindigkeiten des Wassergleitfahrzeuges 10, führt. In der Betriebsposition sind die Gleitplatte 80, die Rückenlehne 51 und die Lenksäule 91 arretiert.

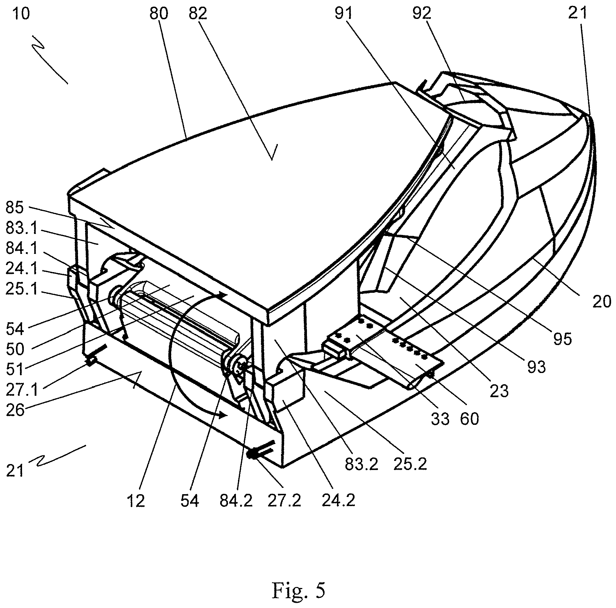

Figur 4 zeigt einen Rumpf des in den Figuren 1, 2 und 3 gezeigten Wassergleitfahrzeugs 10 in einer Transportposition und in einer Seitenansicht und Figur 5 zeigt das in Figur 4 gezeigte Wassergleitfahrzeug in einer perspektivischen Seitenansicht.

Die in den Figuren 1 bis 3 gezeigten Ausleger 30, 40 sind von den Haltern 60, 70 abgebaut. Die Lenksäule 91 ist an der Klappverbindung 92 zum Fußraum 23 des Rumpfes 20 hin eingeklappt. Das Steuer 93 befindet sich so vor der Sitzfläche 52 im Fußraum 23 des Rumpfes 20. Die Rückenlehne 51 des Sitzes 50 ist an der Gelenkverbindung 54 entsprechend einem in Figur 5 gezeigten Doppelpfeil 12 zur Lenksäule 91 hin eingeklappt. Sie liegt mit ihrer Kopfstütze 53 an der Lenksäule 91 an. Die Gleitplatte 80 ist ebenfalls entsprechend dem Doppelpfeil 12 in ihre Transportposition zum Bug 21 des Rumpfes 20 hin eingeklappt. Dazu ist die Gleitplatte 80 um die Gelenkverbindungen 84.1, 84.2, wie sie in Figur 1 gezeigt sind, geschwenkt. Die Gelenkverbindungen 84.1, 84.2 befinden sich am oberen Ende der Stege 83.1, 83.2 und an den Lagerböcken 24.1, 24.2, die am oberen Ende der Lagerstege 25.1, 25.2 angeordnet sind. Durch diese Beabstandung der Gleitplatte 80 von den Gelenkverbindungen 84.1, 84.2 kann die Gleitplatte 80 so geschwenkt werden, dass sie in der gezeigten Transportposition mit ihrer oberen Seite 81 an der Rückenlehne 51 bzw. der Kopfstütze 53 des eingeklappten Sitzes 50 anliegt. Die Gleitfläche 82 ist nach außen gewandt und deckt den Sitz 50, die Lenksäule 91 mit dem Steuer 93 und den Fußraum 23 ab. Dadurch sind diese während des Transportes geschützt. Die Halter 60, 70 sind mit der Gleitplatte 80 nach vorne geklappt. Vorteilhaft sind die Gleitplatte 80 und die Rückenlehne 52 sowie die Lenksäule 91 in ihren Transportpositionen arretiert.

In ihrer Betriebsposition, wie sie in den Figuren 1 bis 3 gezeigt ist, liegt die Gleitplatte 80 mit einer Anschlagfläche 85 an eine Anlagefläche 26 am Heck 22 des Rumpfes 20 an und ist dort durch Haltebügel 27.1, 27.2 gehalten.

In einer weiteren, nicht dargestellten Ausführungsform der Erfindung können die Halter 60, 70 weiter einklappbar oder einschiebbar ausgeführt sein, sodass die Außenabmessungen des Rumpfes 20 in seiner Transportposition weiter verringert werden können.

Durch die leicht abnehmbaren Ausleger 30, 40 und die einfach zu trennenden Datenverbindungen zwischen der Steuereinheit und den Motorsteuerungen kann das Wassergleitfahrzeug 10 zum Transport somit einfach in seine Einzelteile, nämlich den Rumpf 20 und die zwei Ausleger 30, 40, zerlegt werden. Durch die einklappbare Lenksäule 91, den einklappbaren Sitz 50 und die einklappbare Gleitplatte 80 können die Außenabmessungen des Rumpfes 20 zum Transport deutlich reduziert werden. Das Wassergleitfahrzeug 10 liegt so in von einer Person tragbaren Baugruppen, nämlich dem linken und dem rechten Ausleger 30, 40 sowie dem in seinen Außenabmessungen verkleinerten Rumpf 20, vor.

Die Montage des Wassergleitfahrzeuges 10 kann einfach, beispielsweise im Wasser, erfolgen. Dazu werden die Gleitplatte 80, die Rückenlehne 51 sowie die Lenksäule 91 in ihre Betriebsposition geklappt und dort arretiert. Anschließend werden die Ausleger 30, 40 mit den Haltern 60, 70 verbunden. Dabei werden die gewünschten Positionen der Ausleger 30, 40 gegenüber dem Rumpf 20 eingestellt. Anschließend werden die Datenleitungen zur Übertragung der Ansteuersignale in die entsprechenden Stecker eingesteckt.

Figur 6 zeigt das Wassergleitfahrzeug 10 aus Figur 1 mit zusätzlich angebrachten Steuerklappen 34, 44.. Die Steuerklappen 34, 44 sind mittels Gelenken 34.1, 44.1 an dem linken und dem rechten Ausleger 30, 40 angelenkt. Die Steuerklappen 34, 35 stellen elektromechanisch verstellbare Steuerelemente dar, welche in ihrer Ausrichtung zu den Auslegern 30, 40 verstellt werden können. Dazu sind nicht dargestellt elektromechanisch angetriebene Stellelemente vorgesehen. Diese werden in Abhängigkeit von dem Steuersignal des Steuers 93 angesteuert. Mithilfe der Steuerklappen 34, 35 kann die Manövrierbarkeit des Wasserfahrzeuges 10 weiter verbessert werden.

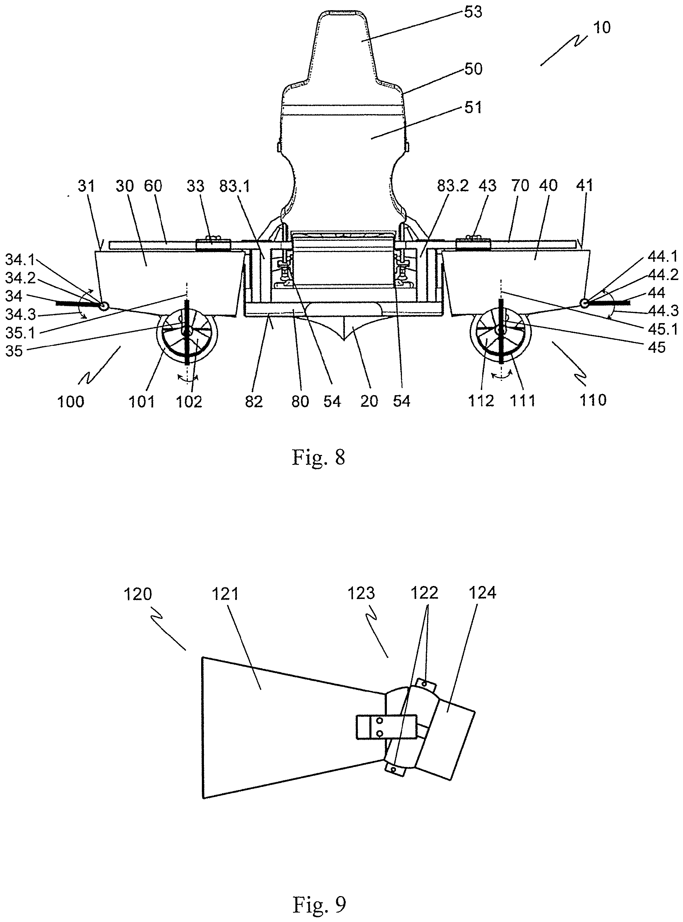

Figur 7 zeigt das Wassergleitfahrzeug 10 aus Figur 2 mit zusätzlich angebrachten Rudern 35, 45. Figur 8 zeigt das Wassergleitfahrzeug 10 aus Figur 3 mit zusätzlich angebrachten Steuerklappen 34, 44 und Rudern 35, 45.

Wie besonders aus Figur 8 zu entnehmen ist, sind die Ruder 35, 45 in Verlängerung der Strömungskanäle 101, 111 angeordnet. Sie liegen somit unmittelbar im Strömungsbereich des durch die Propeller 102, 112 ausgestoßenen Wassers. Die Ruder 35, 45 können mit nicht dargestellten, elektromechanisch angetriebene Steuerelementen bei einer Betätigung des Steuer 93 entsprechend der gezeigten Doppelpfeil 35.2, 45.2 um entsprechende Ruderachsen 35.1, 45.1 geschwenkt werden. Gleichzeitig können die Steuerklappen 34, 44 um ihrer durch die Gelenke 34.1, 44.1 gebildeten Drehachsen 34.2, 44.2 gedreht werden. Durch die Ruder 35, 45 und die Steuerklappen 34, 44 kann die Steuerbarkeit des Wassergleitfahrzeuges 10 gegenüber einer alleinigen Steuerung über die Antriebseinheiten 100, 110 verbessert werden.

Figur 8 zeigt eine Düsenanordnung 120 für ein Wassergleitfahrzeug 10. Die Düsenanordnung 120 ist aus einer Schubdüse 121 und einer damit über eine gelenkige Verbindung 123 verbundenen Umkehrdüse 124 gebildet. Seitlich sind im Bereich der gelenkigen Verbindung 123 Angriffspunkte 122 an der Umkehrdüse 124 angebracht.

Die Düsenanordnung 120 ist Teil eines Jet-Antriebes, welcher alternativ zu den gezeigten Antriebseinheiten 100, 110 vorgesehen sein kann. Dabei ist jeweils ein Jet-Antrieb in einem Ausleger 30, 40 angeordnet. Bei einem solchen Jet-Antrieb ist ein von einem Motor angetriebener Propeller in Form eines Impellers in einem Strömungskanal angeordnet. Der Impeller saugt Wasser von einer Wassereintrittsöffnung an und stößt dieses durch die gezeigte Düsenanordnung 120 zum Heck 22 des Wassergleitfahrzeuges 10 hin aus. Durch den dabei erhaltenen Rückstoß wird das Wassergleitfahrzeug 10 angetrieben. Zur Verbesserung der Steuerbarkeit des Wassergleitfahrzeuges 10 kann die Ausrichtung der Umlenkdüse 124 und damit die Ausstoßrichtung des Wasserstrahls verändert werden. Dies erfolgt in Abhängigkeit von dem Steuersignal des Proportionalgebers durch nicht dargestellte elektromechanisch angetriebene Stellelemente, welche mit den Angriffspunkten 122 verbunden sind.

## Patentansprüche

1. Wassergleitfahrzeug (10) mit einem Rumpf (20), zumindest einem Sitz (50) und zwei seitlich des Rumpfes (20) angeordneten und mit dem Rumpf (20) mittelbar oder unmittelbar verbundenen Auslegern (30, 40), wobei jedem Ausleger (30, 40) eine in ihrer Antriebsleistung getrennt ansteuerbare Antriebseinheit (100, 110) mit jeweils zumindest einem von einem Motor, insbesondere einem Elektromotor, angetriebenen Propeller (102, 112) zugeordnet ist, wobei ein Steuer (93) des Wassergleitfahrzeugs (10) mit einem Proportionalgeber verbunden ist und dass ein Steuersignal des Proportionalgebers einer Steuereinheit zugeführt ist, welche die Motoren in Abhängigkeit von dem Steuersignal des Proportionalgebers mittelbar oder unmittelbar ansteuert,
**dadurch gekennzeichnet dass** jeweils eine Motorsteuerung mit einem Leistungssteller in den Auslegern angeordnet und mit der Steuereinheit verbunden ist, dass die Motorsteuerungen die Motorleistung des jeweils zugeordneten Motors in Abhängigkeit von dem Steuersignal des Proportionalgebers steuern, dass Akkumulatoren zur Energieversorgung der Motoren in den Auslegern angeordnet sind und
dass die Steuereinheit ein analoges Steuersignal des Proportionalgebers in zumindest ein digitales Steuersignal umwandelt und/oder dass der Proportionalgeber ein digitales Steuersignal ausgibt und dass das digitale Steuersignal über Datenverbindungen den in oder an den Auslegern angeordneten Motorsteuerungen zugeführt ist, welche in Abhängigkeit von dem digitalen Steuersignal die Leistung des jeweils zugeordneten Motors steuern.

2. Wassergleitfahrzeug (10) nach Anspruch 1,
**dadurch gekennzeichnet,**
**dass** der Steuereinheit ein Geschwindigkeitssignal eines Geschwindigkeitsstellers des Wassergleitfahrzeugs (10) zugeführt ist und dass das Geschwindigkeitssignal bei der in Abhängigkeit von dem Steuersignal des Proportionalgebers erfolgenden Ansteuerung der Motoren mit berücksichtigt ist.

3. Wassergleitfahrzeug (10) nach Anspruch 2,
**dadurch gekennzeichnet,**
**dass** die Steuereinheit aus dem Steuersignal des Proportionalgebers und dem Geschwindigkeitssignal des Geschwindigkeitsstellers zumindest ein digitales Ansteuersignal bildet und den Motorsteuerungen zuführt und/oder dass die Steuereinheit aus dem Geschwindigkeitssignal des Geschwindigkeitsstellers ein digitales Geschwindigkeitssignal bildet und den Motorsteuerungen zuführt.

4. Wassergleitfahrzeug (10) nach einem der Ansprüche 1 bis 3,
**dadurch gekennzeichnet,**
**dass** der Proportionalgeber als Inkrementalgeber oder als Potentiometer oder als kapazitiver Proportionalgeber ausgeführt ist.

5. Wassergleitfahrzeug (10) nach einem der Ansprüche 1 bis 4,
**dadurch gekennzeichnet,**
**dass** die Datenverbindung zwischen der Steuereinheit und den Motorsteuerungen über Datenleitungen oder über Funkverbindungen erfolgt.

6. Wassergleitfahrzeug (10) nach einem der Ansprüche 1 bis 5,
**dadurch gekennzeichnet,**
**dass** die Datenverbindung bidirektional ausgeführt ist.

7. Wassergleitfahrzeug (10) nach einem der Ansprüche 1 bis 6,
**dadurch gekennzeichnet,**
**dass** jedem Motor ein Akkupack aus zusammengeschalteten Akkumulatoren zugeordnet ist, dass der Ladezustand der Akkupacks erfasst und über die Datenverbindung der Steuereinheit zugeführt wird und dass die Steuereinheit dazu ausgelegt ist, die maximal einstellbare Leistung der Motoren in Abhängigkeit von dem Ladezustand des am weitesten entladenen Akkupacks für beide Motoren gleich zu begrenzen.

8. Wassergleitfahrzeug (10) nach Anspruch 7,
**dadurch gekennzeichnet,**
**dass** die Temperatur der Motoren und/oder die Temperatur der Akkumulatoren und/oder die Temperatur der Steuereinheit erfasst und bei der Begrenzung der maximal einstellbaren Leistung der Motoren berücksichtigt wird.

9. Wassergleitfahrzeug (10) nach einem der Ansprüche 5 bis 8,
**dadurch gekennzeichnet,**
**dass** die Ausleger (30, 40) lösbar mit dem Rumpf (20) verbunden sind und/oder dass die Datenleitungen zwischen der Steuereinheit und den Motorsteuerungen lösbar, insbesondere steckbar, ausgeführt sind.

10. Wassergleitfahrzeug (10) nach einem der Ansprüche 1 bis 9,
**dadurch gekennzeichnet,**
**dass** eine Lenksäule (91), welche das Steuer (93) trägt, klappbar mit dem Rumpf (20) verbunden ist.

11. Wassergleitfahrzeug (10) nach einem der Ansprüche 1 bis 10,
**dadurch gekennzeichnet,**
**dass** an den Auslegern jeweils ein oder mehrere elektromotorisch angetriebene Steuerelemente angeordnet sind und dass diese elektromotorisch angetriebenen Steuerelemente in Abhängigkeit von dem Steuersignal und/oder dem Geschwindigkeitssignal und/oder dem zumindest einen aus dem analogen Steuersignal und dem Geschwindigkeitssignal gebildeten digitalen Ansteuersignal ansteuerbar sind.

12. Wassergleitfahrzeug (10) nach Anspruch 11,
**dadurch gekennzeichnet,**
**dass** als elektromotorisch angetriebene Steuerelemente an den Auslegern schwenkbar angebrachte Steuerklappen (34, 44) und/oder Ruder und/oder schwenkbar angeordnete Umlenkdüsen (124) und/oder schwenkbar angeordnete Propellergondeln ansteuerbar sind.

13. Wassergleitfahrzeug (10) nach einem der Ansprüche 1 bis 12,
**dadurch gekennzeichnet,**
**dass** die Schubrichtung der Antriebseinheiten (100, 110) umkehrbar ist.

## Claims

1. A floating vessel (10) having a hull (20), at least one seat (50) and two outriggers (30, 40) arranged laterally of the hull (20) and directly or indirectly connected to the hull (20), wherein each outrigger (30, 40) is assigned a drive unit (100, 110) which can be controlled separately in terms of its drive power, each having at least one propeller (102, 112) driven by a motor, in particular an electric motor,
wherein a rudder (93) of the floating vessel (10) is connected to a proportional transducer and a control signal of the proportional transducer is supplied to a control unit which directly or indirectly controls the motors in response to the control signal of the proportional transducer,
**characterised in that**
in each case a motor controller is arranged with a power controller in the outriggers and is connected to the control unit, **in that** the motor controllers control the motor power of the respectively assigned motor in response to the control signal of the proportional transducer, **in that** accumulators for supplying energy to the motors are arranged in the outriggers and
**in that** the control unit converts an analogue control signal of the proportional transducer into at least one digital control signal and/or **in that** the proportional transducer outputs a digital control signal and **in that** the digital control signal is supplied via data connections to the motor controllers arranged in or on the outriggers, which, in response to the digital control signal, control the power of the respectively assigned motor.

2. The floating vessel (10) according to claim 1,
**characterised in that**
the control unit is supplied with a speed signal of a speed controller of the floating vessel (10) and **in that** the speed signal is taken into account in the control of the motors which occurs in response to the control signal of the proportional transducer.

3. The floating vessel (10) according to claim 2,
**characterised in that**
the control unit forms, from the control signal of the proportional transducer and the speed signal of the speed controller, at least one digital drive signal and supplies the motor controllers, and/or **in that** the control unit forms, from the speed signal of the speed controller, a digital speed signal and supplies the motor controllers.

4. The floating vessel (10) according to one of claims 1 to 3,
**characterised in that**
the proportional transducer is designed as an incremental transducer or as a potentiometer or as a capacitive proportional transducer.

5. The floating vessel (10) according to one of claims 1 to 4,
**characterised in that**
the data connection between the control unit and the motor controllers occurs via data lines or via radio connections.

6. The floating vessel (10) according to one of claims 1 to 5,
**characterised in that**
the data connection is designed to be bidirectional.

7. The floating vessel (10) according to one of claims 1 to 6,
**characterised in that**
each motor is associated with a battery pack of interconnected accumulators, **in that** the charge state of the battery packs is detected and supplied to the control unit via the data connection, and **in that** the control unit is designed to equally limit the maximum adjustable power of the motors in response to the charge state of the most discharged battery pack for both motors.

8. The floating vessel (10) according to claim 7,
**characterised in that**
the temperature of the motors and/or the temperature of the accumulators and/or the temperature of the control unit is detected and taken into account in limiting the maximum adjustable power of the motors.

9. The floating vessel (10) according to one of claims 5 to 8,
**characterised in that**
the outriggers (30, 40) are detachably connected to the hull (20) and/or **in that** the data lines between the control unit and the motor controllers are designed to be detachable, in particular pluggable.

10. The floating vessel (10) according to one of claims 1 to 9,
**characterised in that**
a steering column (91) which carries the rudder (93) is connected in a hinged manner to the hull (20).

11. The floating vessel (10) according to one of claims 1 to 10,
**characterised in that**
one or more electromotively driven control elements are arranged respectively on the outriggers and **in that** these electromotively driven control elements can be controlled in response to the control signal and/or the speed signal and/or the at least one digital drive signal formed from the analogue control signal and the speed signal.

12. The floating vessel (10) according to claim 11,
**characterised in that**
pivotably mounted control valves (34, 44) and/or paddles and/or pivotably arranged deflecting nozzles (124) and/or pivotably arranged propeller gondolas can be actuated as electromotively driven control elements on the outriggers.

13. The floating vessel (10) according to one of claims 1 to 12,
**characterised in that**
the direction of thrust of the drive units (100, 110) is reversible.

## Revendications

1. Engin de glisse aquatique (10) comprenant une coque (20), au moins un siège (50) et deux flotteurs (30, 40) disposés de part et d'autre de la coque (20) et reliés directement ou indirectement à la coque (20), chaque flotteur (30, 40) étant associé à une unité de propulsion (100, 110) apte à être commandée séparément en termes de puissance de propulsion et respectivement pourvue d'au moins une hélice (102, 112) entraînée par un moteur, en particulier un moteur électrique,
dans lequel un gouvernail (93) de l'engin de glisse aquatique (10) est relié à un capteur proportionnel et un signal de commande du capteur proportionnel est transmis à une unité de commande, qui assure directement ou indirectement la commande des moteurs en fonction du signal de commande du capteur proportionnel,
**caractérisé en ce**
**qu'**une commande de moteur est disposée respectivement avec un contrôleur de puissance dans les flotteurs et reliée à l'unité de commande, **en ce que** les commandes de moteurs commandent la puissance de moteur de chaque moteur qui lui est respectivement associé en fonction du signal de commande du capteur proportionnel, **en ce que** des accumulateurs sont disposés dans les flotteurs pour l'alimentation en énergie des moteurs et
**en ce que** l'unité de commande convertit un signal de commande analogique du capteur proportionnel en au moins un signal de commande numérique et/ou **en ce que** le capteur proportionnel émet un signal de commande numérique et **en ce que** le signal de commande numérique est affecté par des liaisons de données aux commandes de moteur disposées dans ou sur les flotteurs, qui, en fonction du signal de commande numérique, commandent la puissance de chaque moteur associé.

2. Engin de glisse aquatique (10) selon la revendication 1,
**caractérisé en ce**
**qu'**un signal de vitesse d'un contrôleur de vitesse de l'engin de glisse aquatique (10) est transmis à l'unité de commande et **en ce que** le signal de vitesse est pris en compte dans la commande des moteurs réalisée en fonction du signal de commande du capteur proportionnel.

3. Engin de glisse aquatique (10) selon la revendication 2,
**caractérisé en ce**
**que** l'unité de commande forme au moins un signal de commande numérique à partir du signal de commande du capteur proportionnel et du signal de vitesse du contrôleur de vitesse et le transmet aux commandes de moteur et/ou **en ce que** l'unité de commande forme un signal de vitesse numérique à partir du signal de vitesse du contrôleur de vitesse et le transmet aux commandes de moteur.

4. Engin de glisse aquatique (10) selon l'une quelconque des revendications 1 à 3,
**caractérisé en ce**
**que** le capteur proportionnel est conçu comme un codeur incrémental ou comme un potentiomètre ou comme un capteur proportionnel capacitif.

5. Engin de glisse aquatique (10) selon l'une quelconque des revendications 1 à 4,
**caractérisé en ce**
**que** la liaison de données entre l'unité de commande et les commandes de moteur s'effectue via des lignes de données ou des liaisons radio.

6. Engin de glisse aquatique (10) selon l'une quelconque des revendications 1 à 5,
**caractérisé en ce**
**que** la liaison de données est bidirectionnelle.

7. Engin de glisse aquatique (10) selon l'une quelconque des revendications 1 à 6,
**caractérisé en ce**
**que** chaque moteur est associé à une batterie d'accumulateurs interconnectés, **en ce que** l'état de charge des batteries est détecté et transmis via la liaison de données à l'unité de commande et **en ce que** l'unité de commande est conçue pour limiter de manière identique la puissance réglable maximale des moteurs en fonction de l'état de charge des batteries les plus chargées pour les deux moteurs.

8. Engin de glisse aquatique (10) selon la revendication 7,
**caractérisé en ce**
**que** la température des moteurs et/ou la température des accumulateurs et/ou la température de l'unité de commande sont détectées et prises en compte dans la limitation de la puissance réglable maximale des moteurs.

9. Engin de glisse aquatique (10) selon l'une quelconque des revendications 5 à 8,
caractérisé en ce
en ce que les flotteurs (30, 40) sont reliés de manière détachable à la coque (20) et/ou en ce que les lignes de données entre l'unité de commande et les commandes de moteur sont détachables, en particulier enfichables.

10. Engin de glisse aquatique (10) selon l'une quelconque des revendications 1 à 9,
**caractérisé en ce**
**qu'**une colonne de direction (91) portant la commande (93) est reliée de manière pliable à la coque (20).

11. Engin de glisse aquatique (10) selon l'une quelconque des revendications 1 à 10,
**caractérisé en ce**
**qu'**un ou plusieurs éléments de commande entraînés par moteur électrique sont agencés sur les flotteurs et **en ce que** ces éléments de commande entraînés par moteur électrique peuvent être commandés en fonction du signal de commande et/ou du signal de vitesse et/ou du au moins un signal de commande numérique formé à partir du signal de commande analogique et du signal de vitesse.

12. Engin de glisse aquatique (10) selon la revendication 11,
**caractérisé en ce**
**que**, en guise d'éléments de commande entraînés par moteur électrique, des clapets de commande (34, 44) agencés pivotants sur les flotteurs et/ou des gouvernails et/ou des buses de déviation (124) agencées pivotantes et/ou des pods agencés pivotants peuvent être commandés.

13. Engin de glisse aquatique (10) selon l'une quelconque des revendications 1 à 12,
**caractérisé en ce**
**que** le sens de poussée des unités de propulsion (100, 110) est réversible.
